# EUROPÄISCHE PATENTSCHRIFT

(11) **EP 1 491 850 B1**
(45) Veröffentlichungstag und Bekanntmachung des Hinweises auf die Patenterteilung: **27.04.2016**
(21) Anmeldenummer: 04003808.5
(22) Anmeldetag: 19.02.2004
(51) Int. Cl.: G01B 5/25, G01C 9/00

(54) **Messgerät und Verfahren zur Bestimmung der räumlichen Orientierung eines Körpers relativ zu zwei horizontalen Bezugsrichtungen**
Measuring instrument and method for determining the spatial orientation of a body relative to two horizontal reference directions
Dispositif de mesure et procédé pour déterminer l'orientation spatiale d'un corps par rapport à deux directions de référence horizontales

(30) Priorität: 19.02.2003 DE 10307088
(43) Veröffentlichungstag der Anmeldung: 29.12.2004
(73) Patentinhaber: Prüftechnik Dieter Busch AG, 85737 Ismaning (DE)
(72) Erfinder: Hermann, Michael, 78052 Villingen-Schwenningen (DE)

(56) Entgegenhaltungen:
- DE-A1- 10 115 548
- DE-A1- 10 138 831
- US-A- 4 914 598
- US-A- 5 191 713
- US-B1- 6 453 239

## Beschreibung

Die Erfindung betrifft ein Meßgerät zur präzisen Bestimmung der räumlichen Orientierung eines Körpers relativ zu zwei horizontalen Bezugsrichtungen, so daß die Bestimmung sowohl eines Nickwinkels (englisch: pitch) als auch eines Rollwinkels (englisch: roll) in verbesserter und sehr genauer Weise durchgeführt werden kann. Dabei sollte der Körper zur Ausführung der Messung raumfest gelagert und unbewegt sein, zumindest darf (und muß) während der Ausführung der Messung auf den Körper lediglich die Erdbeschleunigung auf diesen wirken. Insofern ist die Erfindung nicht für Anwendungen bei Schwerelosigkeit im Weltraum geeignet. Weiterhin betrifft die Erfindung die Verwendung des Meßgerätes zum Bestimmen zweier Komponenten der räumlichen Orientierung von Maschinen oder Maschinenelementen wie z.B. Rollen oder Walzen, sowie zur Bereitstellung von Korrektur-Informationen, um dejustierte Maschinen oder Maschinenelemente in eine ausgerichtete Lage zu bringen, weiterhin auch die Verwendung des Meßgerätes zur Richtungsermittlung an anderen Objekten.

Zum Zwecke der Bestimmung der räumlichen Orientierung eines Körpers relativ zu einer Bezugsrichtung, und absolut innerhalb eines Inertialsystems, ist es seit einiger Zeit bekannt, genaue Kreiselsysteme zu verwenden. Neben mechanischen Kreiseln, deren Präzision durch mechanische Randbedingungen limitiert wird, sind seit einiger Zeit Kreisel auf optischer Basis, insbesondere in der Ausführungsform mit einem sog. Ringlaser, als hochgenaue Richtungs- und Orientierungs-Meßgeräte auf dem Markt. Eine solche Einrichtung ist aus der Patentschrift US 6195615 bekannt. Leider sind die Kosten für besonders genaue Instrumente dieser Art von erheblichem Umfang, so daß es von signifikantem Interesse ist, die Kosten/Nutzen-Relation solcher Meßgeräte deutlich zu verbessern.

Die US 5191713 offenbart ein Verfahren, bei dem insgesamt 12 Inclinometer auf einem Schiff zur Messung der Lage von mehreren Plattformen sowie einer Bezugsplattform verwendet werden.

Auch in der DE 195 46 405 wird ein hochgenaues Kreiselsystem auf optischer Basis beschrieben, welches zum gegenseitigen Ausrichten von Körpern, insbesondere für Wellen, Walzen u. dgl. vorgesehen ist.

Ein in der DE 42 05 869 angegebenenes Verfahren ist noch erheblich aufwendiger, da ein doppelter Satz an Kreiselsystemen für die Messung vorgesehen ist.

Äußerst aufwendig ist die in der US 5,719,764 vorgestellte Lösung. Zum einen sind redundante Kontrollkreisel und -Akzelerometer vorgesehen, welche eine Kurzfrist- und eine Langfrist-Fehlerabschätzung durchführen. Zum anderen ist vorgesehen, je zwei solcher Systeme zu einem im Tandem-Verbund arbeitenden doppelt abgesicherten Gerät zusammenzuschalten.

Eine relativ preiswerte, aber weniger genau funktionierende Lösung ist aus der DE 198 00 901 bekannt, welche anstelle optischer Kreisel solche auf Basis mechanischer Oszillatoren vorsieht.

Aus der DE 198 30 359 ist eine Vorrichtung und ein Verfahren bekannt, die räumliche Lage und Bewegungen eines (humanen) Körpers oder von Körperteilen zu bestimmen, wobei an die Genauigkeit der Meßergebnisse weniger hohe Anforderungen gestellt werden, als an die zeitliche Verfügbarkeit, d.h. zeitliche Auflösung, solcher Daten.

Aus der DE 199 49 834 vom 19.4.2001 ist ein Verfahren bekannt, welches es gestattet, die Genauigkeit der Lösung gemäß DE 195 46 405 noch einmal erheblich zu steigern, wobei nur der Software-Aufwand zusätzlich ins Gewicht fällt, der apparative Aufwand jedoch der gleiche bleiben kann.

Eine weitere Verwendung von kreiselbasierten Richtungsmeßgeräten wird in der DE 100 60 974 vom 30. 8. 2001 vorgestellt. Das Gerät ist dafür vorgesehen, mittels eines Adapters auf die stirnseitigen Enden von Walzen positioniert werden zu können; es ist zusätzlich mit einer Positionsmeßvorrichtung auf Laserbasis ausgestattet.

Aus der DE 10115548 ist es bekannt, kreiselbasierte Richtungsmeßgeräte mit mehr als drei Einzelkreiseln zu verwenden, welche z.B. parallel zu den Normalen oder sonstigen Symmetrielinien eines regulären Oktaeders oder Ikosaeders usw. montiert sind. Hierdurch wird es möglich, ein Gerät mit verbesserter Meßgenauigkeit bereitzustellen, da einerseits mit statistischen Methoden gearbeitet werden kann (was bei nur drei Einzelkreiseln praktisch nicht möglich ist) und darüberhinaus auch eine gegenseitige Überprüfung der Einzelkreisel durchgeführt werden kann.

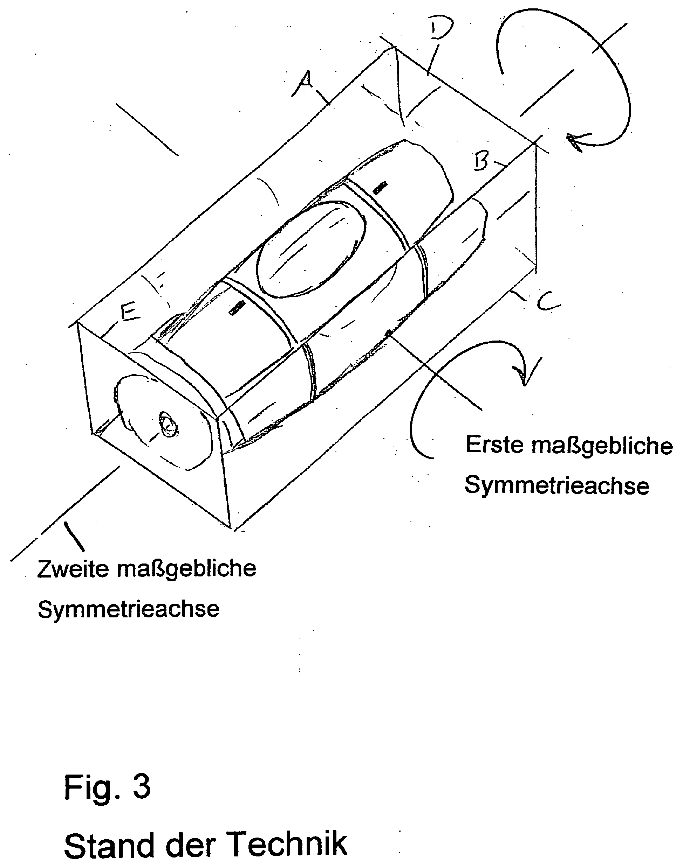

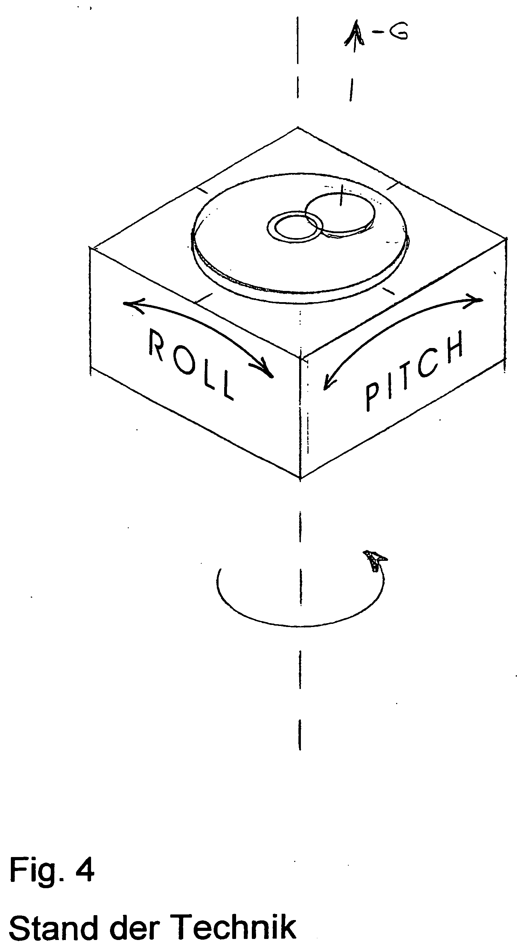

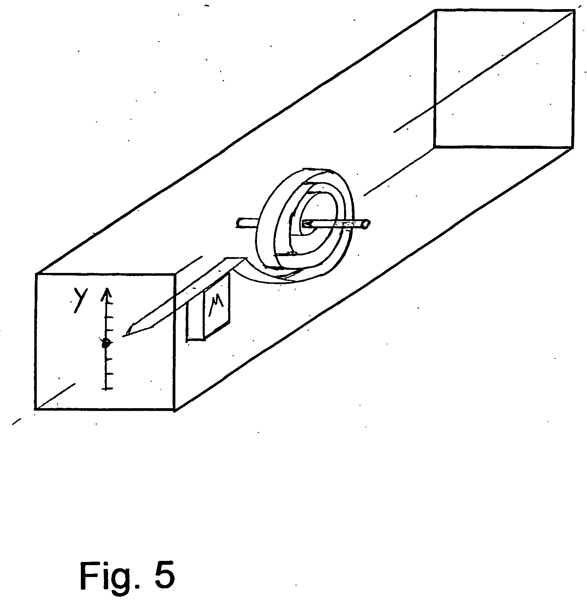

Die genannte Aufgabenstellung liegt der in der vorliegenden Anmeldeschrift dargestellten Erfindung zugrunde. Die Erfindung löst das anstehende Problem dadurch, daß eine redundante Auslegung eines mit Inklinometern ausgestatteten zweidimensional sensierenden Richtungsmeßsystems vorgenommen wird, so daß dessen funktionale Eigenschaften sowohl hinsichtlich Betriebssicherheit, als auch insbesondere auch hinsichtlich Genauigkeit verbessert werden. Gleichzeitig reduzieren sich, sofern weniger genaue und damit kostengünstigere einzelne Systeme verwendet werden, die Gestehungskosten des Gesamtsystems. Mit anderen Worten: Die Erfindung sieht vor, anstelle eines Inclinometersystems bestehend aus zwei orthogonal zueinander ausgerichteten Einzel-Inclinometern nunmehr ein solches System vorzusehen, welches aus mindestens drei, bevorzugt vier oder aber weiteren Einzel-Inclinometern besteht. Dies sind bevorzugt MEMS-Inclinometer, die einzeln zwar nicht die Richtung einer Beschleunigung angeben können (im Gegensatz zu einfachen Flüssigkeits-Inclinometern gemäß Fig. 3 und 4), dafür aber geeignet sind, die Größe einer zugehörigen Beschleunigungskomponente zu ermitteln, wie dies in Fig. 5 anhand der gezeigten einfachen Feder-Masse-Kombination angedeutet ist. -

Gemäß dem unabhängigen Anspruch 1 kann die Lösung des zugrundeliegenden Problems durch Implementation der folgend genannten Prinzip-Anordnung bereitgestellt werden:

Meßgerät zur Bestimmung der räumlichen Orientierung eines Körpers relativ zu zwei in einer, insbesondere horizontalen, Ebene liegenden Bezugsrichtungen, mit einem Gehäuse zum Anlegen an eine Oberfläche oder an eine Kante eines zu vermessenden Körpers, mit einer Mehrzahl von Inclinometersystemen zur Ermittlung von stabilen Raumlagen oder von Kipp- oder Drehbewegungen relativ zu vordefinierten Inertialrichtungen, wobei zumindest vier oder mehr Einzelinclinometer innerhalb des Gehäuses vorhanden sind, deren jeweilige Referenz- oder Wirkrichtung zur Erfassung eines Anteils der Erdbeschleunigung nach unterschiedlichen Richtungen des Raumes orientiert sind, und wobei eine jede der Kombinationen aus jeweils drei zu einer Inclinometertriade zusammengefassten Einzelinclinometern ein jeweiliges Triaden-Meßergebnis liefert, welches die räumliche winkelmäßige Orientierung des Messgerätes oder eines mit diesem kontaktierten Körpers nach den Richtungskoordinaten Roll und Pitch ausweist, so daß mehrere Triaden-Meßergebnisse ermittelbar sind; so daß weiterhin aus mehreren Triaden-Meßergebnissen durch Mittelwertbildung oder andere Rechenverfahren ein Messergebnis Gesamt-Messergebnis bereitstellbar ist, welches eine genauere winkelmäßige Orientierung des Meßgerätes oder eines mit diesem kontaktierten Körpers hinsichtlich der genannten Richtungskoordinaten Roll und Pitch ausweist, im Vergleich zu einzelnen Triaden-Meßergebnissen.

Die Erfindung betrifft weiterhin die Verwendung dieses Meßgeräts gemäß dem Anspruch 9.

Eine rechentechnisch interessante Ausführungsform der Erfindung besteht z.B. aus acht symmetrisch um eine Achse oder um ein Zentrum angeordneten Einzelinclinometern. Unabhängig davon, ob es sich um preiswerte oder qualitativ hochwertige Einzel-Inclinometer handelt, kann in jedem Fall durch Kombination einer Vielzahl von gleichartigen, oder aber auch unterschiedlich konstruierten, Einzel-Inclinometern eine überproportional verbesserte Genauigkeite bereitgestellt werden, da es teilweise möglich ist, Temperatur- und Schwerkrafteffekte durch Differenzbildung, Mittelwertbildung oder andere statistische Betrachtungen zu kompensieren. Außerdem werden durch die gemäß der Erfindung vorgesehene innovative, d.h. nunmehr dreidimensionale, also insbesondere nicht koplanare Anordnung der Einzelsensoren, im Gegensatz zu den vorher bekannten zweidimensionalen Anordnungen, bessere Berechnungsgrundlagen zur Bereitstellung eines Meßergebnisses geschaffen, so daß auch aus diesem Grunde ein besser funktionierendes Inclinometer-Gesamtsystem bereitgestellt werden kann. Dies ist ein besonders wichtiger Aspekt der vorliegenden Erfindung. Beispielsweise werden gemäß der Erfindung typischerweise alle verwendbaren, d.h. nicht koplanaren Kombinationen von 3 aus insgesamt "k" Stück einzelner Inclinometer-Meßwerte zur Bildung einzelner individueller Inclinometer-Meßwert-Triaden herangezogen, um eine Mehrzahl von unabhängigen Richtungsmessungen mit derartig gebildeten Inclinometer-Triaden ausführen zu können. Da bei dem genannten Beispiel von 3 aus 8 Inclinometern also maximal (n über k =) 56 einzeln auswertbare Meß-Systeme zur Erkennung einer winkelmässigen Orientierung des Meßgerätes nach zwei Koordinaten im Raum darstellbar sind, kann die Genauigkeit eines insgesamt bereitzustellenden Meßergebnisses hinsichtlich Drift und weiterer Fehler durch Mittelwertbildung oder weitere statistische Betrachtungen, oder durch andere Rechenverfahren wie z.B. digitale Filterung, signifikant verbesssert werden. Gleichzeitig können sich die vielen genannten Meßsysteme, bestehend aus nunmehr je drei einzelnen Inclinometern, gegenseitig überprüfen, so daß Einzel-Inclinometer mit verschlechterten Meß-Eigenschaften gemäß der Erfindung bereits während des regulären Betriebes identifiziert und gegebenenfalls stillgelegt werden können. Wie erwähnt, liegt erfindungsgemäß eine zusätzlich erwünschte Redundanz vor, so daß ein Meßsystem der vorgeschlagenen Art, mit beispielweise mindestens 4 Einzelinclinometern, bei Ausfall eines einzelnen Inclinometers trotzdem weiterhin benutzbar ist, wenn auch bei reduzierter Genauigkeit. Gemäß der Erfindung wird also ein Meßgerät zur Bestimmung der räumlichen Orientierung eines Körpers relativ zu zwei in einer Horizontalebene liegenden Bezugsrichtungen geschaffen, welches ein Gehäuse zum Anlegen an eine Oberfläche eines zu vermessenden Körpers aufweist, innerhalb dessen eine Mehrzahl von einzelnen Inclinometern zur Ermittlung eines anteiligen Wertes der Erdbeschleunigung bezüglich jeweiliger, den einzelnen Inclinometern zugeordneten Symmetrieachsen versehen ist, und wobei sich das Meßgerät dadurch auszeichnet, daß mindestens drei, bevorzugt jedoch vier oder viele weitere, Einzelinclinometer innerhalb des Gehäuses vorhanden sind, die möglichst nicht-koplanar in jeweils unterschiedliche Raumrichtungen orientiert oder ausgerichtet sind, und wobei alle Kombinationen aus jeweils drei nicht-koplanar orientierten, zu einer sog. Inclinometertriade zusammenfaßbarer, Einzelinclinometer ein jeweils erstes Meßergebnis liefern, welches die räumliche winkelmäßige Orientierung des Meßgerätes oder eines mit diesem kontaktierten Körpers nach den beiden räumlichen Koordinaten "Roll" und ""Pitch" ausweist. Diese erfindungsgemäße Anordnung wird so benutzt, daß zunächst eine Vielzahl an Meßergebnissen erster Art bereitgestellt wird, und sodann aus der Vielzahl der Meßergebnisse erster Art zusätzlich ein Gesamt-Meßergebnis (d.h. Meßergebnis zweiter Art) ermittelt wird, welches im Vergleich zu den einzelnen Meßergebnissen erster Art eine signifikant genauere winkelmäßige Orientierung des Meßgerätes oder eines mit diesem kontaktierten Körpers anzeigt. Gemäß einem anderen Aspekt der Erfindung kann aus der Vielzahl der Meßergebnisse erster Art unter Verwendung eines geeigneten mathematischen Algorithmus wie z.B. SVD (Singulärmatrixzerlegung) auch sofort ein signifikant genaueres Meßergebnis bereitgestellt werden.

Die Anzahl von acht Inclinometer-Einzelsystemen innerhalb eines Gesamtsystems gemäß der Erfindung ist nur als Beispiel zu verstehen. Es können z.B. auch vier, fünf, sechs usw.

Inclinometer oder eine wesentlich größere Anzahl verwendet werden, zum Beispiel 150 bis 400 miniaturisierte Elemente dieser Art, insbesondere solche, deren Ausgangssignal im wesentlichen sinusoidförmig über den Pitch- und Rollwinkel variiert, oder die anhand einer Korrekturwert-Tabelle entsprechend kompensiert werden können. - Die gewählte Zahl der Einzel-Inclinometer sollte jedoch zu einem Kompromiß hinsichtlich apparativem Aufwand und erzielbarer Genauigkeitssteigerung führen. Ein solcher Kompromiß hängt ersichtlich auch davon ab, welcher Kostenanteil für eine erforderliche zusätzliche Recheneinheit zum Errechnen des gewünschten Gesamt-Resultates zu veranschlagen ist. Für die sehr klein konstruierten, äußerst stromsparenden und sehr preiswerten MEMS-Inclinometer (im Kostenbereich von derzeit ca. EUR 5.-- pro Exemplar) erscheint es gemäß der Erfindung vorteilhaft, ca. 150 einzelne Inclinometer zu einem Gesamtsystem zusammenzufassen. Aus Gründen einer erleichterten Datenverarbeitung sollen die einzelnen Inclinometer vorzugsweise ein pulscodemoduliertes Ausgangssignal bereitstellen. Auf diese Weise kann das sogenannte Multiplexen oder die Verwendung einer Vielzahl von herkömmlichen Analog-Digital-Wandlern vermieden werden. Am besten geschieht dies in an sich bekannter Weise unter Verwendung digitaler sogenannter Timer/Counter-Bauelemente, speziell unter Verwendung handelsüblicher miniaturisierter Präzisions-Zeitgeber mit Genauigkeiten von im Bereich von mindestens 10 (E-6) oder besser.

Gemäß der Erfindung ist es wie erwähnt möglich, die vorgesehenen Einzelsysteme symmetrisch um eine einzelne Vorzugsachse zu gruppieren. Es ist ebenfalls möglich, die Orientierung der Einzelsysteme nach Symmetrierichtungen eines regulären Polyeders, oder aber annähernd statistisch über den Raumwinkel (4 * Pi) zu verteilen. Es sollte aber gewährleistet sein, daß die einzelnen Orientierungen der Einzelsysteme hinsichtlich eines gerätefesten Koordinatensystemes genügend fest montiert sind und auch nur geringe thermisch bedingte Richtungsänderungen innerhalb des Gehäuses erfahren. Es versteht sich von selbst, daß auch die Konstruktion des Gehäuses genügend formstabil sein muß. Weiterhin ist es wie bereits erwähnt wichtig, daß die jeweils drei Einzelinclinometern zugeordneten Richtungs-Vektoren nicht räumlich koplanar liegen. Gemäß der Erfindung werden die Meßwerte, die von den Einzelinclinometern typischerweise in einem schiefwinkligen dreidimensionalen Koordinatensystem ermittelt werden, auf ein rechtwinkliges kartesisches Koordinatensystem umgerechnet. Die Rechenverfahren für eine solche Umrechnung sind an sich bekannt. Auf diese Weise können ausgegebene Meßwerte z.B. in zwei der drei Eulerschen Winkel (nämlich Stampf- und Rollwinkel bzw. Pitch und Roll) bezüglich eines solchen rechtwinkligen Koordinatensystems ausgedrückt werden. Eine Bereitstellung eines Meßwertes für den Gierwinkel (Yaw) mittels Inclinometer allein ist ersichtlich nicht möglich. - Die genannte Umrechnung wird, genauso wie die statistischen Berechnungen, durch einen in einem umschließenden Gehäuse des Meßgerätes vorgesehenen Computer vorgenommen. Zur Einsparung von Versorgungsleistung kann dessen Taktfrequenz reduziert werden, sobald ersichtlich ist, daß keine aktuelle Messung auszuführen ist. Dies kann z.B. dadurch begründet sein, daß eine sensierte räumliche Lage des erfindungsgemäßen Gerätes sich nicht verändert und als stabil angenommen werden kann.

Diese und weitere Einzelheiten der Erfindung werden anhand der Zeichnung erläutert. Es zeigt:
- Fig. 1: eine axial-symmetrische Anordnung von 7 Einzelinclinometern relativ zu einem x-y-z - Koordinatensystem
- Fig. 2: eine schematische Darstellung einer Systemkonfiguration mit 7 Einzelinclinometern
- Fig. 3: ein herkömmliches Flüssigkeits-Inclinometer (Wasserwaage) nach dem Stand der Technik
- Fig. 4: eine andere herkömmliche Wasserwaage nach dem Stand der Technik
- Fig. 5: ein modellhaft gezeigtes mechanisches Inclinometer zur Erfassung einer vertikal gerichteten Schwerkraftkomponente

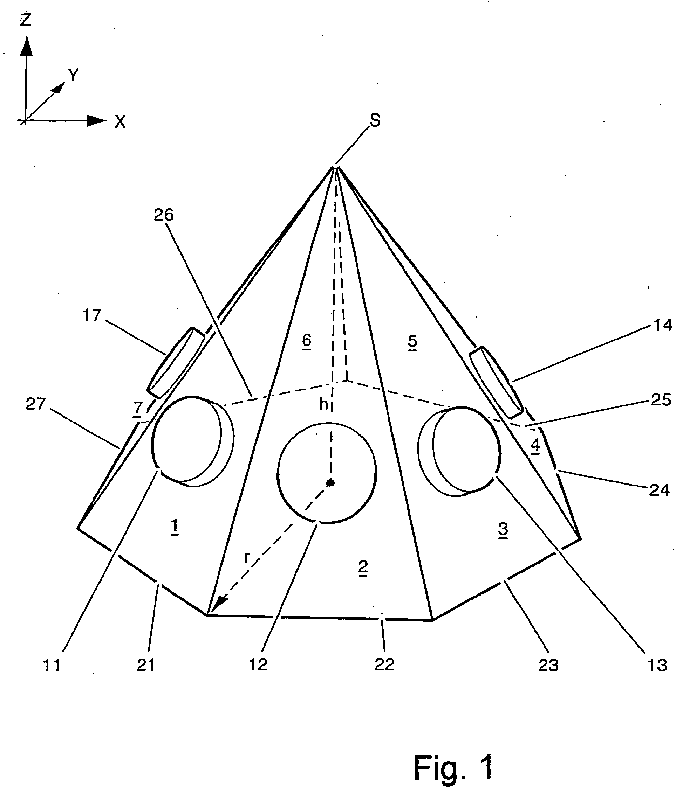

Wie aus Fig. 1 ersichtlich, werden definierte Richtungen für das Gehäuse eines Meßgerätes der hier vorgestellten Art bezüglich eines gerätefest vorgegebenen x-y-z- Koordinatensystems z.B. durch eine Pyramide definiert. Deren Seitenflächen 1, 2, 3, 4, 5, 6 und 7 besitzen eine gemeinsame Ecke S sowie Grundkanten 21, 22, 23, 24, 25, 26 und 27, welche die Grundfläche der Pyramide begrenzen. Die einzelnen Seitenflächen unterscheiden sich also eindeutig in ihren Richtungs-Cosinus-Werten. Auf eine einzelne Seitenfläche (Bezugsziffer 1 bis 7) werde jeweils ein einzelnes, z.B. mikromechanisches oder thermodynamisch funktionierendes Inclinometer angebracht (Bezugsziffern 11, 12, 13, 14, 17; die restlichen vier Einzelinclinometer sind aus Gründen der Übersichtlichkeit nicht gezeigt). Ein einzelnes Inclinometer kann dann bezüglich seines eigenen Koordinatensystems durch mindestens einen Vektor gekennzeichnet werden, der jeweils eine systembedingte Wirkungsrichtung definiert. Dies kann beispielsweise bzw. bevorzugt ein Normalen-Vektor sein, der dann senkrecht auf, oder gegebenenfalls parallel, zur betreffenden Seitenfläche der Pyramide liegt. Somit können die Richtungs-Cosinus-Werte oder andere verwendbare Richtungs-Kennwerte zur Spezifikation einer maßgeblichen Referenz-Richtung der einzelnen Inclinometer relativ zum gezeigten x-y-z-Koordinatensystem genau angegeben werden. Durch eine Kombination von je drei beliebig gewählten Inclinometern (Triaden) kann somit auch eine Dreh- oder Kipp-Bewegung des gerätefesten Koordinatensystems nach zwei Achsen des Raumes ausgemessen werden. Das Meßergebnis kann nach Umrechnung in Form von Pitch- und Rollwerte dargestellt werden. Voraussetzung ist, daß die genannten Referenz-Richtungen der einzelnen Inclinometer nicht paarweise koplanar sind. Insofern ist die zu erwartende Genauigkeit der einzeln darstellbaren Triaden aus Fig. 1 nicht gleichwertig, vielmehr sind gewisse Kombinationen durch höhere Genauigkeit ausgezeichnet als z.B. eine Triade von direkt benachbarten Inclinometern 11, 12, 13.

Da in der abgebildeten Konfiguration insgesamt 35 voneinander unabhängige Inclinometer-Triaden angegeben werden können, kann die Beobachtung der genannten Dreh- oder Kipp-Bewegung, mithin auch die Vermessung der Relativlage eines Körpers bezüglich zweier horizontal liegender Referenzrichtungen, sich auf 35 Einzelmessungen beziehen. Im Idealfalle würden alle Einzelmessungen ein gleiches Ergebnis liefern. Die einzelnen Konfigurationen arbeiten jedoch, wie bereits dargestellt, mit unterschiedlicher Genauigkeit. Die Einzelmessungen werden daher bevorzugt so zu einem Gesamtwert zusammengefaßt, daß die genauer arbeitenden Inclinometertriaden mit einem höheren Gewicht bei einer durchzuführenden Mittelwertbildung versehen werden. Solche genauer funktionierende Inclinometertriaden sind also z.B. solche, deren Abstände nicht kleiner als 2 Positionen sind.

Am wenigsten genau messen typischerweise diejenigen Inclinometertriaden, deren Inclinometer direkt beabstandet sind d.h. keine Zwischenräume aufweisen und deren Referenzrichtungen somit nur ein kleinvolumiges Epiped aufspannen.

Zur Erzielung eines guten Meßergebnisses sollte in der gezeigten Anordnung das Verhältnis der Höhe h zum Radius r eines zugrundegelegten Pyramidenkörpers etwa einen Wert von 0,2 bis 1,2 aufweisen. Ein bevorzugter Wert liegt bei 0,55. - Bei einem ca. zweifachen Materialeinsatz im Vergleich zu einer herkömmlichen zweidimensionalen Inclinometeranordnung kann also gemäß der Erfindung ein mehrfaches, z.B. ca. 3-4 fach genaueres Ergebnis erhalten werden usw. Der Sinn und der wesentliche Vorteil der Erfindung besteht also darin, ein bevorzugt mehrfach redundantes Inclinometersystem bereitzustellen, dessen Genauigkeit überproportional zum Materialeinsatz steigt. Ein zusätzlicher Vorteil der Erfindung kann darin erkannt werden, daß Meßgeräte der gattungsgemäßen Art, wie sie zum Vermessen von Rollen in Papier- und Walzwerken verwendet werden, ohnehin von eher langgestreckter Gestalt sind und daher Platz für relativ viele einzelne Inclinometersysteme, mit unterschiedlichster Ausrichtung relativ zum Gehäuse eines solchen Meßgerätes, bieten.

In einer bevorzugten, nicht gezeigten Ausgestaltung der Erfindung liegen z.B. acht Einzelinclinometer auf den Flächen eines regelmäßigen Oktaeders (allgemein: k Einzelinclinometer parallel oder normal zu den Flächen, Seiten, Seitenhalbierenden, und/oder Ecken eines regulären Polyeders.) Bei einer solchen Anordnung sind die Richtungsunterschiede zwischen den einzelnen Inclinometern im Mittel größer als bei der in Fig. 1 gezeigten Anordnung. Darüberhinaus ist die Berechnung der unterschiedlichen Inclinometer-Kombinationen aufgrund von Symmetrie-Eigenschaften vereinfacht, so daß eine solche Anordnung noch effizienter arbeitet, d.h. bei wenig gesteigertem Materialaufwand ein weiter verbessertes Meßergebnis liefert; usw.

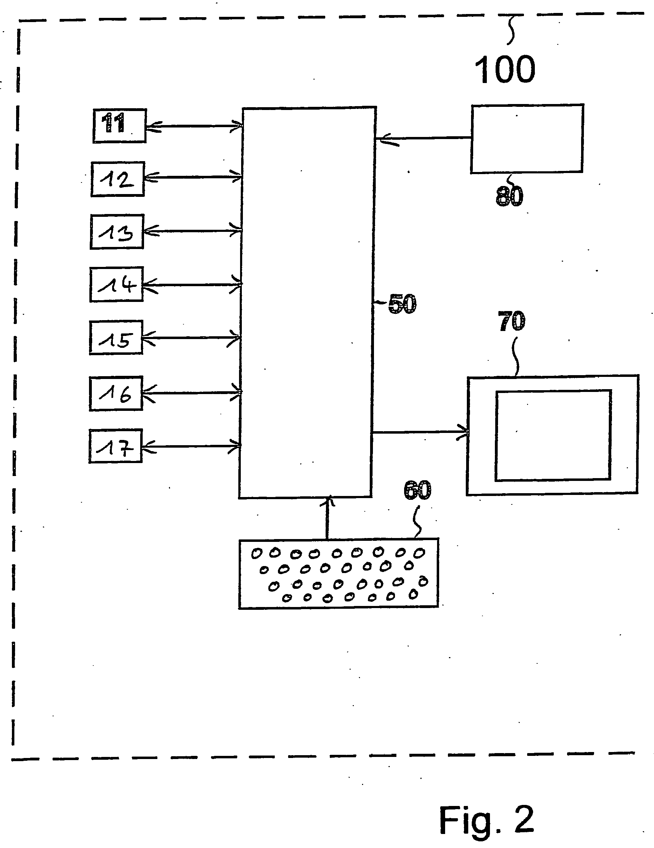

In der Schemazeichnung gemäß Fig. 2 wird dargestellt, wie ein erfindungsgemäßes Gesamtsystem sich zusammensetzt aus einem Gehäuse 100, einzeln in diesem Gehäuse angeordneten Inclinometern 11 bis inkl. 17, einem Rechner 50 zur Abfrage der von den Inclinometern abgegebenen Signale und zur Ermittlung eines Ergebnisses in Form eines Orientierungswertes. Dieses Ergebnis kann auf einem Sichtschirm 70 dargestellt werden. Die Bedienung des Gesamtsystems erfolgt bevorzugt mittels einer Tastatur 60, wiewohl andere Eingabemittel (Maus, Trackball, Stift, Sprache usw.) vorgesehen werden können. Das Gesamtsystem wird bevorzugt von einer Batterie oder Akkumulator 80 bestromt, bei Bedarf kann auch ein Netzanschluß vorgesehen sein.

Die vorgeschlagene Anorordnung kann wie beschrieben für sich alleine betrieben werden. Sie wird jedoch mit besonderem Vorteil im Zusammenspiel mit einer ähnlich arbeitenden Kombination von Gyroskopen, speziell MEMS-Gyroskopen incl. thermodynamisch arbeitenden Gyroskopen verwendet, welche innerhalb eines gemeinsamen Gehäuses angeordnet ist. Mit einer solchen Gyroskop-Kombination ist es bekanntlich möglich, nicht nur die Inclinationswerte Pitch und Roll zu vermessen, sondern darüberhinaus den Azimutalwert "Yaw" zu erfassen. Allerdings sind die genannten Inclinations- und Azimutalwerte mit störenden Driftfehlern behaftet. Das gemäß der vorliegenden Erfindung vorgestellte Inclinometer-Gerät arbeitet jedoch statisch, seine Drift über die Zeit ist wesentlich kleiner als bei einem Gyroskop. Wenn, wie es bei der Vermessung von Walzen oder anderen rotierbaren Zylindern möglich ist, eine Kombination von Inclinometern und Gyroskopen zwischenzeitlich immer wieder für eine Weile fixiert werden kann (und dann in präziser Weise die Größe und Richtung der Erdbeschleunigung registriert), können die zwei Komponenten Roll und Pitch der Gyroskop-Werte durch die jeweiligen Komponenten der Inclinometer-Werte korrigiert, also "gestützt" werden. Auf diese Weise kann zusätzlich eine Abschätzung erfolgen, inwieweit der von den Gyroskopen bereitgestellte Yaw-Wert auf einen vermuteten Bestwert zurückgeführt werden kann.

Das Meßgerät soll also im mechanischen Ruhezustand ein aktuelles Gyroskop-basiertes Richtungsmessergebnis hinsichtlich seiner azimutalen (Yaw) Drehbewegung anhand aktueller Inclinometer-basierter Roll- und Pitch-Richtungsmessergebnisse in möglichst rascher Folge auf einen vermuteten Bestwert abgleichen, wobei der vermutete Bestwert anhand eines vordefinierten oder adaptierbaren Algorithmus errechnet wird. Die genannte Adaption kann zum Beispiel unter Verwendung von Temperatur-Messungen an den einzelnen Sensoren oder innerhalb des Gerätes erfolgen, oder anhand eines Güte-Schätzwertes für eine durchgeführte Messung. Damit wird also eine signifikante Verbesserung der genannten Gyroskop-basierten Richtungsmessung erreicht, und zwar typischerweise um mindestens eine Größenordnung. Es wird daher mit genaueren Instrumenten der genannten Art möglich, auch den Einfluß der Erdrotation auf das Meßergebnis zu bestimmen und dieses Zusatz-Meßergebnis zur Korrektur des eigentlich gewünschten Meßergebnisses heranzuziehen. Diese spezielle Kompensation ist bei höchstwertigen, optisch funktionierenden Gyroskopen an sich bereits Standard.
Inclusive, oder ohne die optionale Implementation der obengenannten Gyroskope wird die Erfindung bevorzugt verwendet bei der Vermessung von Gebäuden, von Werkzeugmaschinen, oder an Maschinen, die zur Herstellung oder Bearbeitung von Metall, Papier oder Plasticfolien dienen. Weiterhin wird die Erfindung mit ganz besonderem Vorteil verwendet in Gerätschaften, die der Erdölprospektion oder -förderung dienen.

## Patentansprüche

1. Meßgerät zur Bestimmung der räumlichen Orientierung eines Körpers relativ zu zwei in einer insbesondere horizontalen Ebene liegenden Bezugsrichtungen, mit einem Gehäuse (100) zum Anlegen an eine Oberfläche oder an eine Kante eines zu vermessenden Körpers, mit einer Mehrzahl von Inclinometersystemen (11, 12, 13, 14, 15, 16, 17) zur Ermittlung von stabilen Raumlagen oder von Kipp- oder Drehbewegungen relativ zu vordefinierten Inertialrichtungen, wobei zumindest vier oder mehr Einzelinclinometer (11, 12, 13, 14, 15, 16, 17) innerhalb des Gehäuses vorhanden sind, deren jeweilige Referenz- oder Wirkrichtung zur Erfassung eines Anteils der Erdbeschleunigung nach unterschiedlichen Richtungen des Raumes orientiert sind, und wobei eine jede der Kombinationen aus jeweils drei zu einer Inclinometertriade zusammengefaßten Einzelinclinometern (11, 12, 13, 14, 15, 16, 17) ein jeweiliges Triaden-Meßergebnis liefert, welches die räumliche winkelmäßige Orientierung des Meßgerätes oder eines mit diesem kontaktierten Körpers nach den Richtungskoordinaten Roll und Pitch ausweist, so daß mehrere Triaden-Meßergebnisse ermittelbar sind; so daß weiterhin aus mehreren Triaden-Meßergebnissen durch Mittelwertbildung oder andere Rechenverfahren ein Gesamt-Meßergebnis bereitstellbar ist, welches eine genauere winkelmäßige Orientierung des Meßgerätes oder eines mit diesem kontaktierten Körpers hinsichtlich der genannten Richtungskoordinaten Roll und Pitch ausweist, im Vergleich zu einzelnen Triaden-Meßergebnissen.

2. Meßgerät nach Anspruch 1, wobei sich die unterschiedlichen Referenzrichtungen auf einen Symmetriepunkt beziehen und im wesentlichen den Richtungen von Flächennormalen eines regulären Polyeders in Form eines Tetraeders oder eines Oktaeders entsprechen.

3. Meßgerät nach Anspruch 1, wobei sich die unterschiedlichen Referenzrichtungen auf eine Linie im Raum beziehen und im wesentlichen den Richtungen entsprechen, die durch die Normalen von Seitenflächen (1, 2, 3, 4, 5, 6, 7) einer mindestens 4-seitigen Pyramide definiert sind.

4. Meßgerät nach Anspruch 1, wobei die unterschiedlichen Referenzrichtungen sich auf eine Linie im Raum beziehen und im wesentlichen den Richtungen entsprechen, die durch die Normalen von Seitenflächen (1, 2, 3, 4, 5, 6, 7) einer mindestens 3-seitigen Pyramide definiert sind.

5. Meßgerät nach Anspruch 2, wobei acht einzelne Inclinometer (11, 12, 13, 14, 15, 16, 17) vorhanden sind, deren maßgebliche Referenz- oder Wirkrichtungen parallel zu den Flächennormalen, oder zu den Kanten (21, 22, 23, 24, 25, 26, 27), oder zu den Eck-Radien, oder zu den Kanten-Mittelpunkts-Radien eines regulären Polyeders ausgerichtet sind.

6. Meßgerät nach einem der vorstehenden Ansprüche, zur Verwendung im Zusammenspiel mit einem Gyroskop-basierten Richtungsmeßgerät und zur Stützung der von diesem erfaßten Meßwerte bezüglich einer Roll-Koordinate und einer Pitch-Koordinate.

7. Meßgerät nach Anspruch 6, bei welchem im mechanischen Ruhezustand des Meßgerätes ein aktuelles Gyroskop-basiertes Richtungsmessergebnis hinsichtlich einer azimutalen Drehbewegung des Meßgerätes anhand aktueller Inclinometer-basierter Roll- und Pitch-Richtungsmessergebnisse in möglichst rascher Folge auf ein verbessertes Gyroskop-basiertes Richtungsmessergebnis hinsichtlich einer azimutalen Drehbewegung korrigiert wird, wobei das verbesserte Gyroskop-basierte Richtungsmessergebnis anhand eines vordefinierten oder adaptierbaren Algorithmus errechnet wird.

8. Meßgerät nach einem der Ansprüche 1 bis 5, welches geeignet ist, ein Gesamt-Meßergebnis durch Ermittlung eines gewichteten Mittelwertes und unter Verwendung von Gewichtungs-Kriterien bereitzustellen.

9. Verwendung eines Meßgerätes nach einem der vorhergehenden Ansprüche zur Bestimmung der räumlichen Orientierung eines Körpers relativ zu zwei in eine, insbesondere horizontalen, Ebene liegenden Bezugsrichtungen.

10. Verwendung nach Anspruch 9, bei der das Meßgerät in einer Maschine zur Herstellung oder Bearbeitung von Papier, Metall oder Plasticfolien verwendet wird.

11. Verwendung nach Anspruch 9, bei der das Meßgerät in einer Werkzeugmaschine verwendet wird.

12. Verwendung nach Anspruch 9, bei der das Meßgerät in einer Maschine oder einem Gerät zur Prospektion oder Förderung von Erdöl verwendet wird.

13. Verwendung nach Anspruch 9, bei der das Meßgerät in einem Gerät zur Vermessung von Gebäuden oder Bauten verwendet wird.

## Claims

1. Measurement device for determining the three-dimensional orientation of a body relative to two reference directions lying in an in particular horizontal plane, having a housing (100) to be placed on a surface or on an edge of a body to be measured, having a plurality of inclinometer systems (11, 12, 13, 14, 15, 16, 17) for determining steady-state three-dimensional positions or of tilting or rotational movements relative to predefined inertial directions, there being at least four or more individual inclinometers (11, 12, 13, 14, 15, 16, 17) within the housing, whose respective reference or active directions are oriented in accordance with different directions in space in order to register a component of the acceleration due to gravity, and each of the combinations of in each case three individual inclinometers (11, 12, 13, 14, 15, 16, 17) combined to form one inclinometer triad supplying a respective triad measured result, which indicates the three-dimensional angular orientation of the measurement device or of a body with which the latter makes contact in accordance with the directional coordinates of roll and pitch, so that a plurality of triad measured results can be determined; so that, furthermore, from a plurality of triad measured results, by means of averaging or other computational methods, an overall measured result can be provided, which indicates a more accurate angular orientation of the measurement device or a body with which the latter makes contact with regard to the aforementioned directional coordinates of roll and pitch, as compared with individual triad measured results.

2. Measurement device according to Claim 1, wherein the different reference directions relate to a point of symmetry and substantially correspond to the directions of surface normals of a regular polyhedron in the form of a tetrahedron or an octahedron.

3. Measurement device according to Claim 1, wherein the different reference directions relate to a line in space and substantially correspond to the directions which are defined by the normals of side faces (1, 2, 3, 4, 5, 6, 7) of an at least 4-sided pyramid.

4. Measurement device according to Claim 1, wherein the different reference directions relate to a line in space and substantially correspond to the directions which are defined by the normals of side faces (1, 2, 3, 4, 5, 6, 7) of an at least 3-sided pyramid.

5. Measurement device according to Claim 2, wherein there are eight individual inclinometers (11, 12, 13, 14, 15, 16, 17), whose definitive reference or active directions are aligned parallel to the surface normals or to the edges (21, 22, 23, 24, 25, 26, 27) or to the corner radii or to the edge center radii of a regular polyhedron.

6. Measurement device according to one of the preceding claims, for use in interaction with a gyroscope-based directional measurement device and for the support of the measured values registered by the latter with respect to a roll coordinate and a pitch coordinate.

7. Measurement device according to Claim 6, in which, in the mechanical rest state of the measurement device, a current gyroscope-based directional measured result is corrected with respect to an azimuthal rotational movement to an improved gyroscope-based directional measured result with respect to an azimuthal rotational movement in the shortest possible time by using current inclinometer-based roll and pitch directional measured results, the improved gyroscope-based directional measured result being calculated by using a predefined or adaptable algorithm.

8. Measurement device according to one of Claims 1 to 5 which is suitable for providing an overall measured result by determining a weighted average and by using weighting criteria.

9. Use of a measurement device according to one of the preceding claims for determining the three-dimensional orientation of a body relative to two reference directions lying in an, in particular horizontal, plane.

10. Use according to Claim 9, in which the measurement device is used in a machine for the production or processing of paper, metal or plastic films.

11. Use according to Claim 9, in which the measurement device is used in a machine tool.

12. Use according to Claim 9, in which the measurement device is used in a machine or a device for prospecting for or supplying oil.

13. Use according to Claim 9, in which the measurement device is used in a device for measuring buildings or structures.

## Revendications

1. Appareil de mesure destiné à déterminer l'orientation spatiale d'un corps par rapport à deux directions de référence situées dans un plan, notamment dans un plan horizontal, et présentant
un boîtier (100) destiné à être placé sur une surface ou une arête d'un corps à mesurer,
plusieurs systèmes d'inclinomètre (11, 12, 13, 14, 15, 16, 17) déterminant des positions spatiales stables ou des déplacements d'inclinaison ou de rotation par rapport à des directions inertielles prédéfinies,
au moins quatre inclinomètres (11, 12, 13, 14, 15, 16, 17) ou davantage étant prévus à l'intérieur du boîtier et leurs directions de référence ou d'action étant orientées dans différentes directions de l'espace pour saisir une partie de l'accélération gravitationnelle,
l'une des combinaisons de trois inclinomètres (11, 12, 13, 14, 15, 16, 17) rassemblés en un trio d'inclinomètres délivrant un résultat de mesure de trio qui présente l'orientation angulaire spatiale de l'appareil de mesure ou d'un corps en contact avec ce dernier selon les coordonnées directionnelles de roulis et de tangage de telle sorte que plusieurs résultats de mesure de trio puissent être déterminés et qu'à partir de plusieurs résultats de mesure de trio, un résultat de mesure global qui représente une orientation angulaire de l'appareil de mesure ou d'un corps en contact avec ce dernier par rapport auxdites coordonnées directionnelles de roulis et de tangage plus précise que des résultats de mesure de trio distincts puisse être préparé par formation d'une valeur moyenne ou autre procédé de calcul.

2. Appareil de mesure selon la revendication 1, dans lequel les différentes directions de référence se rapportent à un point de symétrie et correspondent essentiellement aux directions des normales aux surfaces d'un polyèdre régulier qui présente la forme d'un tétraèdre ou d'un octaèdre.

3. Appareil de mesure selon la revendication 1, dans lequel les différentes directions de référence sont situées sur une ligne de l'espace et correspondent essentiellement aux directions définies par les normales aux surfaces latérales (1, 2, 3, 4, 5, 6, 7) d'une pyramide comptant au moins quatre côtés.

4. Appareil de mesure selon la revendication 1, dans lequel les différentes directions de référence concernent une ligne de l'espace et correspondent essentiellement aux directions définies par les normales aux surfaces latérales (1, 2, 3, 4, 5, 6, 7) d'une pyramide à au moins trois côtés.

5. Appareil de mesure selon la revendication 2, dans lequel huit inclinomètres (11, 12, 13, 14, 15, 16, 17) dont les directions de référence ou d'action déterminantes sont parallèles aux normales aux surfaces, aux arêtes (21, 22, 23, 24, 25, 26, 27), aux rayons aux sommets ou aux rayons entre centre et arêtes d'un polyèdre régulier sont prévus.

6. Appareil de mesure selon l'une des revendications précédentes, destiné à être utilisé en coopération avec un appareil de mesure de direction basée sur gyroscope et pour soutenir les valeurs de mesure saisies par ce dernier par rapport à une coordonnée de roulis ou une coordonnée de tangage.

7. Appareil de mesure selon la revendication 6, dans lequel, lorsque l'appareil de mesure est à un état mécanique de repos, un résultat effectif de mesure de direction basée sur gyroscope, est corrigé en termes du déplacement de rotation azimutal de l'appareil de mesure à l'aide de résultats effectifs de mesure de direction de roulis et de tangage basée sur inclinomètre et se succédant de manière aussi rapide que possible, pour obtenir un résultat de mesure de direction basée sur gyroscope corrigé en termes du déplacement de rotation azimutal, le résultat amélioré de mesure de direction basé sur gyroscope étant calculé à l'aide d'un algorithme pré-défini ou adaptatif.

8. Appareil de mesure selon l'une des revendications 1 à 5, convenant pour délivrer un résultat de mesure global par détermination d'une valeur moyenne pondérée et en recourant à des critères de pondération.

9. Utilisation d'un appareil de mesure selon l'une des revendications précédentes pour déterminer l'orientation spatiale d'un corps par rapport à deux directions de référence situées dans un plan, et notamment dans un plan horizontal.

10. Utilisation selon la revendication 9, dans laquelle l'appareil de mesure est utilisé dans une machine de fabrication ou de traitement de papier, de métal ou de films en matière plastique.

11. Utilisation selon la revendication 9, dans laquelle l'appareil de mesure est utilisé dans une machine outil.

12. Utilisation selon la revendication 9, dans laquelle l'appareil de mesure est utilisé dans une machine ou un appareil de prospection ou de production de pétrole.

13. Utilisation selon la revendication 9, dans laquelle l'appareil de mesure est utilisé dans un appareil de mesure de bâtiments ou d'ouvrages d'art.
